(19) Europäisches Patentamt / European Patent Office / Office européen des brevets

(11) **EP 2 107 336 B1**

(12) **EUROPÄISCHE PATENTSCHRIFT**

(45) Veröffentlichungstag und Bekanntmachung des Hinweises auf die Patenterteilung:
**12.12.2012 Patentblatt 2012/50**

(51) Int Cl.:
*G01B 11/04* (2006.01)     *G01B 11/14* (2006.01)
*G01B 11/25* (2006.01)     *B07C 5/12* (2006.01)
*G06T 7/00* (2006.01)

(21) Anmeldenummer: **09157051.5**

(22) Anmeldetag: **01.04.2009**

(54) **Verfahren und Vorrichtung zur Bilderkennung von bewegten Objekten, wie etwa in Förderanlagen**

Method and device for image recognition of moved objects, such as in transport devices

Procédé et dispositif de reconnaissance d'image d'objets mobiles, comme par exemple dans des installations de transport

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **02.04.2008 AT 5102008**

(43) Veröffentlichungstag der Anmeldung:
**07.10.2009 Patentblatt 2009/41**

(73) Patentinhaber: **Atos IT Solutions and Services GmbH**
**1210 Wien (AT)**

(72) Erfinder:
• **Galbavy, Christian**
**3001 Tulbingerkogel (AT)**
• **Kobler, Robert**
**1170 Wien (AT)**
• **Scholz, Christoph**
**1070 Wien (AT)**
• **Wimmer, Helmut**
**1190 Wien (AT)**

(74) Vertreter: **Patentanwaltskanzlei WILHELM & BECK**
**Prinzenstrasse 13**
**80639 München (DE)**

(56) Entgegenhaltungen:
**US-A- 4 929 843     US-A- 4 965 665**
**US-A- 5 102 224**

• **MATTONE R ET AL: "Fuzzy-based processing of 3D information for items localization in the automated sorting of recyclable packaging" FUZZY SYSTEMS PROCEEDINGS, 1998. IEEE WORLD CONGRESS ON COMPUTATIONAL INTELLIGENCE., THE 1998 IEEE INTERNATIONAL CONFERENCE ON ANCHORAGE, AK, USA 4-9 MAY 1998, NEW YORK, NY, USA,IEEE, US, Bd. 2, 4. Mai 1998 (1998-05-04), Seiten 1613-1618, XP010287399 ISBN: 978-0-7803-4863-9**
• **MATTONE R ET AL: "Sorting of items on a moving conveyor belt. Part 1: a technique for detecting and classifying objects" ROBOTICS AND COMPUTER INTEGRATED MANUFACTURING, ELSEVIER SCIENCE PUBLISHERS BV., BARKING, GB, Bd. 16, Nr. 2-3, 1. April 2000 (2000-04-01), Seiten 73-80, XP004198080 ISSN: 0736-5845**

**Beschreibung**

Die Erfindung betrifft ein Verfahren zur Bilderkennung von einzelnen bewegten Objekten, wie etwa in Förderanlagen, insbesondere auf Förderbändern, bei welchem mittels einer zweidimensionalen Quelle von Licht, insbesondere einem Laser, eine Linie auf den Hintergrund der Objekte, z.B. auf das Förderband, projiziert wird und von einer optoelektronischen Einrichtung laufend Bilder von sich vor diesem Hintergrund befindenden Objekten und der Lichtlinie aufgenommen werden, und die Bilder mittels Bildverarbeitung zu einer dreidimensionalen Darstellung aus Liniensegmenten zusammengesetzt werden, sowie eine entsprechende Vorrichtung.

Die Erfindung kann grundsätzlich auf alle sich vor einem Hintergrund bewegenden Objekte angewendet werden, also etwa auf Fahrzeuge, die sich auf einer Fahrbahn (z.B in einem Parkhaus oder in einem Straßentunnel) befinden. Eine naheliegende Anwendung ist aber jene auf Fördereinrichtungen, wobei es sich hierbei um klassische Fördereinrichtungen wie Förderbändern handeln kann, auf denen die einzelnen Objekte aufgelegt sind, oder um miteinander verbundene, fremdangetriebene (Kettenantrieb, ...) Wannen oder Wagen, in welche die Objekte eingelegt werden, oder um Fördereinrichtungen im weiteren Sinn: hier wären zum Beispiel mehrere Wagen (auf Schienen oder mittels Sensoren geführt) die Objekte, deren Abstand bzw. Lage zueinander bestimmt wird, oder selbstfahrende Wagen, Roboter oder Transportbehälter.

Im Folgenden wird die Erfindung - ohne Einschränkung der Allgemeinheit - vor allem anhand der Anwendung auf Förderbänder beschrieben.

Die Geschwindigkeit der Objekte, also z.B. die Förderbandgeschwindigkeit, ist dabei weitgehend festgelegt, die Bilderkennung muss entsprechend schnell erfolgen, um die Daten aus der Bilderkennung auf das Objekt anwenden zu können.

Benötigt werden solche Verfahren dann, wenn in Förderanlagen die Verarbeitung von Objekten, wie etwa von Paketen oder Gepäckstücken, von bestimmten Voraussetzungen ausgeht. So ist es oft erforderlich, dass die einzelnen Objekte einen Mindestabstand voneinander aufweisen, um verarbeitet werden zu können, etwa bei Förderanlagen, die mit Lichtschranken und/oder Drehgebern den Fluss der Objekte steuern.

Das erste Objekt muss etwa an einem bestimmten Punkt nach links transportiert werden, das zweite Objekt soll zum Beispiel auf dem Förderband verbleiben. Wenn nun beide Objekte zu eng aneinander oder gar teilweise übereinander liegen, dann ist nicht gewährleistet, dass das erste und nur das erste Objekt nach links abtransportiert werden kann. Es ist also notwendig, dass das erfindungsgemäße Verfahren die Identifizierung der einzelnen Objekte ermöglicht und erkennt, wenn ein Mindestabstand nicht eingehalten wird, sodass dann in der Förderanlage entsprechende Korrekturen an der Lage der Objekte vorgenommen werden können. Bei selbstangetriebenen Fahrzeugen, Robotern, etc., werden entsprechende Korrekturen der Lage zueinander, z.B. aus Gründen des Kollisionsschutzes, direkt in der Steuerung von einem oder mehreren dieser Fahrzeuge, Roboter, etc., vorgenommen.

In einem anderen Anwendungsbeispiel soll mit dem erfindungsgemäßen Verfahren die Lage oder Orientierung der Objekte in der Förderanlage erkannt werden können. So können etwa über den Rand eines Förderbandes überstehende Objekte identifiziert und in der Folge wieder ausgerichtet werden. Hier kommt es also nicht auf die relative Lage mehrerer Objekte zueinander an, sondern auf die Lage oder Orientierung von Einzelobjekten relativ zur Förderanlage bzw. zum Hintergrund. Bei selbstangetriebenen Fahrzeugen, Robotern, etc. sollen diese etwa einen vorgegebenen Fahrbereich nicht verlassen oder über diesen hinausragen.

Auch soll mit diesem Verfahren die Höhe eines Objekts bestimmt werden können und so Maßnahmen getroffen werden, wenn ein Objekt eine vordefinierte Maximalhöhe überschreitet.

Die Veröffentlichung "Fuzzy-based processing of 3D information for item localization in the automated sorting of recyclable packaging", Autoren Raffaella Mattone, Giuseppina Campagiorni und Andreas Wolf, 1998 IEEE International Conference on Fuzzy Systems, Anchorage, Alaska, Seite 1613-1618, zeigt ein solches Verfahren, das auf der sogenannten "structured light"-Methode basiert. Dabei wird mittels einer zweidimensionalen Quelle von "structured light" - also einer Laserlichtquelle - ein Laserstrahl auf das Förderband projiziert, wobei die Richtung des Laserstrahls mit der Brennachse einer Kamera, die ebenfalls auf das Förderband gerichtet ist, einen Winkel einschließt. Wo sich kein Objekt am Förderband befindet, erscheint der Laserstrahl als gerade Linie auf dem Förderband, deren Lage bezüglich des von der Kamera abgebildeten Bereichs (frame) bekannt ist und somit eine Referenzlinie darstellt. Befindet sich ein Objekt mit einer Höhe ungleich Null auf dem Förderband in der Laserlichtebene, so wird die von der Kamera erfasste Laserlinie um einen bestimmten Abstand von der Referenzlinie abweichen, wobei dieser Abstand proportional zur Höhe des Objekts ist.

Damit die Position der Laserlinie auf dem von der Kamera gelieferten Bild gut erkennbar ist, sollte der Laser entweder sehr intensiv sein oder anderes Licht eliminiert werden oder entsprechend der Farbe des Lasers eine Filterung durchgeführt werden.

Da sich das Förderband mit konstanter Geschwindigkeit v bewegt, können Bilder bzw. Höhenprofile der Objekte in einem Abstand von (v x T) hergestellt werden, wenn T die Zeit ist, welche zur Bildverarbeitung eines Bildes benötigt wird.

Setzt man die einzelnen Bilder eines abgebildeten Bereichs zu einer 3D-Darstellung zusammen, so ergibt sich in Transportrichtung des Förderbands eine diskrete Struktur, normal zur Transportrichtung eine eher kontinuierliche Struktur, nämlich im Wesentlichen Linien, die normal zur Transportrichtung des Förderbands verlaufen.

In der Praxis erhält man Liniensegmente mit verschiedenen Formen, die durch Löcher voneinander getrennt sein können. Diese Löcher können durch Schatten verursacht sein, die von höheren auf niedrigere Objekte geworfen werden, durch eine ungünstige Ausrichtung der Oberfläche eines Objekts oder durch schlechte Reflexion des Laserlichts auf einem bestimmten Bereich des Objekts, sodass hier der Schwellwert für die abgebildete Laserlinie nicht erreicht wird.

Es wird in der Veröffentlichung darauf hingewiesen, dass bei der Datenverarbeitung der Bilddaten Entscheidungen getroffen werden müssen, ob zwei Liniensegmente zum selben Objekt gehören oder nicht bzw. ob ein bestimmtes Liniensegment zu einem bereits durch ein oder mehrere vorhergehende Liniensegmente detektierten Objekt gehört.

Die Veröffentlichung löst dies durch die "Fuzzy logic"-Methode. Dabei werden Regeln aufgestellt, wie Punkte zu Liniensegmenten zusammengesetzt werden und ob ein Loch nur das Liniensegment eines identifizierten Objekts unterbricht oder zwei Objekte voneinander trennt. Dabei wird aber immer auf die Höhe der Punkte der Liniensegmente abgestellt, also auf deren Abstand von der Ebene des Förderbands.

Einen sehr ähnlichen Inhalt hat die Veröffentlichung "Sorting of items on a moving conveyor belt. Part 1: a technique for detecting and classifying objects" der Autoren R. Mattone, G. Campagiorni und F. Galati, Robotics and Computer Integrated Manufacturing, Bd. 16, Nr. 2-3, 1. April 2000, Seiten 73-80.

Die "Fuzzy logic"-Methode zur Bildverarbeitung hat aber den Nachteil, dass die dabei verwendeten Parameter in einem Lernprozess erst einmal bestimmt werden müssen (siehe letzter Absatz der "Conclusions"). In der Praxis bedeutet dies, dass die Bildverarbeitung mit der "Fuzzy logic"-Methode einige Zeit lang an einer realen Förderanlage zumindest mitlaufen muss, ohne dass sie dabei jedoch zur Bilderkennung eingesetzt werden kann.

Eine Aufgabe der Erfindung ist es daher, den Aufwand zur Nutzbarmachung des Verfahrens zur Bildverarbeitung und Bilderkennung zu verringern und einen aufwändigen Lernprozess bei der Bildverarbeitung zu vermeiden.

Dies wird gemäß Anspruch 1 dadurch erreicht, dass ein Liniensegment einem ersten Objekt zugeordnet wird, wenn der räumliche Abstand dieses Liniensegments zu einem benachbarten Liniensegment, das diesem ersten Objekt bereits zugeordnet wurde, einen bestimmten Grenzwert unterschreitet, und andernfalls das Liniensegment einem zweiten Objekt zugeordnet wird.

Es wird also ein bestimmter Grenzwert des räumlichen Abstands zweier benachbarter Liniensegmente vorgegeben. Ob ein Liniensegment nun einem bereits definierten Objekt angehört, kann einfach aus dem Abstand dieses Liniensegments zum benachbarten Liniensegment, welches bereits als zum Objekt gehörig identifiziert wurde, bestimmt werden: ist der Abstand zweier benachbarter Liniensegmente kleiner als der Grenzwert, so gehört das Liniensegment zum bereits bekannten Objekt, zu welchem auch das benachbarte Liniensegment gehört. Ist der Abstand größer als der Grenzwert, so bildet dieses Liniensegment ein eigenes Objekt. Jedes weitere Liniensegment wird dann darauf untersucht, ob es ebenfalls zu diesem neuen Objekt gehört, also der räumliche Abstand unter dem Grenzwert liegt, und so weiter.

Mit diesem Verfahren ist kein langwieriger Lernprozess notwendig, um aus den Liniensegmenten Objekte zu definieren, sondern man findet mit dem einmal definierten Grenzwert für die Abstände das Auslangen.

Zudem wird beim erfindungsgemäßen Verfahren bei der Zugehörigkeit eines Liniensegments zu einem Objekt auf den räumlichen Abstand zwischen den Liniensegmenten abgestellt, während beim eingangs genannten Verfahren auf die Höhe der Punkte der unterschiedlichen Liniensegmente abgestellt wird, also auf deren Abstand von der Ebene des Förderbands. Der Abstand der beiden Liniensegmente in Transportrichtung wird beim eingangs genannten Verfahren nicht berücksichtigt.

Bei der Bestimmung des Abstands zweier benachbarter Liniensegmente hat es sich als einfach und zielführend herausgestellt, wenn der räumliche Abstand zweier benachbarter Liniensegmente als der kleinste räumliche Abstand zwischen einem Punkt auf dem ersten und einem Punkt auf dem zweiten Liniensegment definiert ist. Es wird also nicht aufwändig ein mittlerer Abstand zwischen den beiden Liniensegmenten berechnet, sondern es wird der Abstand von jedem Punkt eines Liniensegments zu jedem anderen Punkt des benachbarten Liniensegments berechnet, wobei der kleinste dieser Werte mit dem Grenzwert verglichen wird. Liegt dann dieser kleinste Abstand unterhalb des Grenzwertes, so gehört das "neue" Liniensegment zum bereits bestehenden Objekt, zu dem auch das benachbarte Liniensegment gehört.

Als besonders vorteilhaft zur Bestimmung der Liniensegmente selbst und/oder zur Zuordnung von Liniensegmenten zu einem Objekt hat sich der RANSAC-Algorithmus herausgestellt.

Eine mögliche Anwendung des erfindungsgemäßen Verfahrens ist dadurch gegeben, dass in Abhängigkeit von der Anzahl und/oder der Lage der einzelnen Objekte in die Steuerung der Förderanlage bzw. der Objekte (bei selbstangetriebenen Objekten) eingegriffen wird.

Eine erfindungsgemäße Vorrichtung ist in Anspruch 5 beansprucht, welche zumindest eine zweidimensionale Quelle von Licht, insbesondere einen Laser, mit der eine Linie auf den Hintergrund der Objekte, z.B. auf ein Förderband, projiziert werden kann, eine optoelektronische Einrichtung, die laufend Bilder von sich vor diesem Hintergrund befindenden Objekten und der Lichtlinie aufnehmen kann, und eine Einrichtung zur Bildverarbeitung, wo die Bilder zu einer dreidimensionalen Darstellung aus Liniensegmenten zusammengesetzt werden können, umfasst. Sie ist dadurch gekennzeichnet, dass die Einrichtung zur Bildverarbeitung ein Computerprogramm enthält, mit welchem ein Liniensegment einem ersten Objekt zugeordnet wird, wenn der räumliche Abstand dieses Liniensegments zu einem benachbarten Liniensegment, das diesem ersten Objekt bereits zugeordnet wurde, einen bestimmten Grenzwert unterschreitet, und andernfalls das Liniensegment einem zweiten Objekt zugeordnet wird.

Dem Verfahren entsprechende Weiterbildungen der erfindungsgemäßen Vorrichtung sind in den Ansprüchen 6 und 7 festgehalten.

Im Folgenden wird auch ein dem erfindungsgemäßen Verfahren entsprechendes Computerprogrammprodukt beschrieben. Das Computerprogrammprodukt ist ein auf einem Datenspeicher gespeichertes Computerprogramm, welches in der Einrichtung zur Bildverarbeitung ablaufen kann. Das Computerprogramm kann entweder bereits in der Einrichtung zur Bildverarbeitung gespeichert sein oder auf einem externen Datenträger, der mit der Einrichtung zur Bildverarbeitung verbunden werden kann.

Das Computerprogramm setzt die Bilder sich vor diesem Hintergrund befindenden, also etwa von auf der Förderanlage befindlichen, Objekten und der Lichtlinie mittels Bildverarbeitung zu einer dreidimensionalen Darstellung aus Liniensegmenten zusammen, wobei ein Liniensegment einem ersten Objekt zugeordnet wird, wenn der räumliche Abstand dieses Liniensegments zu einem benachbarten Liniensegment, das diesem ersten Objekt bereits zugeordnet wurde, einen bestimmten Grenzwert unterschreitet, und andernfalls das Liniensegment einem zweiten Objekt zugeordnet wird.

Aufgrund der Identifizierung einzelner Objekte mit Hilfe des erfindungsgemäßen Verfahrens kann die vorliegende Situation der Objekte auch vordefinierten Klassen bzw. Katalogen zugeordnet werden, die ihrerseits wieder definieren, wie mit den Objekten weiter verfahren wird.

So können etwa folgende Fehlerklassen vorgesehen werden:

1. 2 Objekte liegen in Bewegungsrichtung gesehen zu knapp hintereinander

2. 2 Objekte liegen in Bewegungsrichtung gesehen zu knapp nebeneinander

3. 2 Objekte liegen teilweise übereinander

4. 1 Objekt liegt ganz auf einem anderen Objekt

Im ersten Fall könnte die Fehlerbehebung beispielsweise durch die Förderanlage behoben werden, wenn diese eine Einrichtung zur Verschiebung von Objekten in Bewegungsrichtung besitzt. Der entsprechende Befehl zur Verschiebung könnte dann direkt von einem Computerprogramm an die Einrichtung zur Verschiebung gegeben werden.

Für den vierten Fehlerfall gibt es in Förderanlagen oft keine maschinelle Einrichtung zur Fehlerbehebung, hier könnte von einem Computerprogramm ein Alarm für das Bedienpersonal ausgegeben werden, das diesen Fall händisch behebt.

Die Fehlerklassen können aber noch weiter verfeinert werden, indem etwa bestimmt wird, ob im vierten Fall ein kleineres Objekt auf einem größeren Objekt zu liegen kommt oder ob umgekehrt ein größeres Objekt auf einem kleineren Objekt liegt (und dieses dabei von oben gesehen ganz verdeckt).

Die Erfindung kommt zum Beispiel bei der Bearbeitung von Poststücken zum Einsatz, wo Pakete auf Förderbändern transportiert und anschließend sortiert werden, oder beim Transport und der Sortierung von Gepäckstücken auf Flughäfen.

Mit dem erfindungsgemäßen Verfahren können Fehler- und Problemfälle in Sortier- und Transportanlagen erkannt werden und diese Information an die Anlagensteuerung echtzeitnah übermittelt werden. Echtzeitnah heißt, dass die Fehler- und Problemfälle so rasch identifiziert werden, dass die Anlagensteuerung Eingriffe in den mechanischen Transportablauf vor der nächsten Einrichtung, wo das Objekt bearbeitet werden soll, vornehmen und den Fehler bzw. das Problem beheben kann.

Die erfindungsgemäße Vorrichtung, insbesondere der Laser und die Kamera, können einfach in einer bestehenden Förderanlage installiert und so robust ausgeführt werden, dass eine Anwendung in einer Industrieumgebung möglich ist.

Ein Ausführungsbeispiel der Erfindung ist in den Figuren dargestellt und wird im Folgenden erläutert. Dabei zeigen:

Fig. 1 die Anordnung von Laser und Kamera bezüglich eines Förderbandes,
Fig. 2 die Beziehung zwischen Bild und Bildpunkten der Kamera,
Fig. 3 das von der Kamera aufgenommene Bild eines Objekts,
Fig. 4 das Bild aus Fig. 3 nach der Filterung,

Fig. 5 die aus Fig. 4 bestimmten Liniensegmente,
Fig. 6 die dreidimensionale Überlagerung mehrerer Liniensegmente,
Fig. 7 die Zuordnung der Liniensegmente aus Fig. 6 zu verschiedenen Objekten.

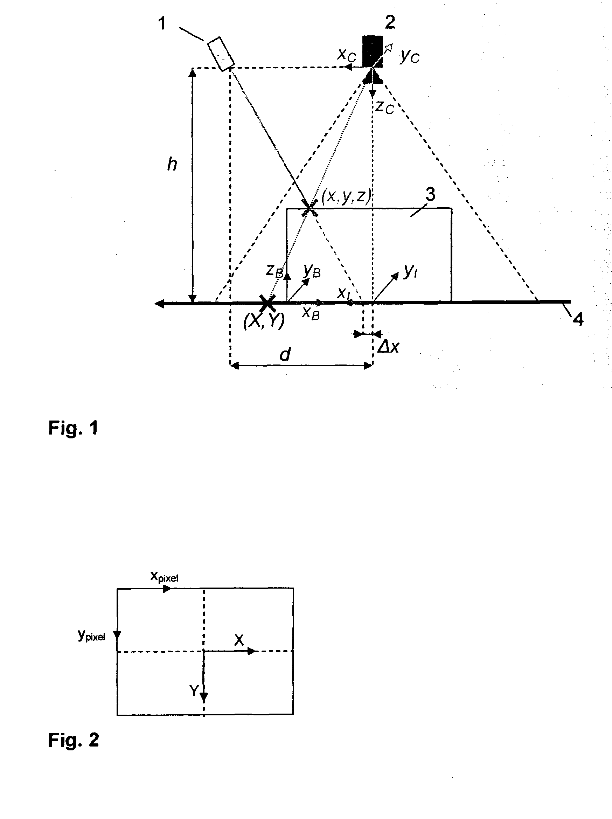

In Fig. 1 ist schematisch die Anordnung des Lasers 1 und der Kamera 2 bezüglich des Förderbandes 4 dargestellt, auf welchem sich ein Objekt 3 befindet. Der Abstand zwischen Laser 1 und Kamera 2 wird mit d bezeichnet und beträgt in diesem Beispiel 1m.

Die Kamera 2 ist im Zentrum des fixen dreidimensionalen Kamerakoordinatensystem ($x_C$,$y_C$,$z_C$).

Die Bildebene der Kamera 2 ist durch das zweidimensionale Koordinatensystem ($x_I$,$y_I$) dargestellt, das hier aus Gründen der Einfachheit auf die selbe Ebene wie das Förderband 4 gesetzt wird, sodass sein Ursprung im Punkt (0,0,h) des Kamerakoordinatensystems ($x_c$,$y_c$,$z_c$) zu liegen kommt. Die Höhe h der Kamera 2 über dem Förderband 4 beträgt in diesem Beispiel 1,3m.

Das dritte Koordinatensystem ist das Objektkoordinatensystem ($x_B$,$y_B$,$z_B$), das am vorderen Ende des Objekts seinen Ursprung hat und sich mit dem Objekt in $x_c$ - Richtung bewegt.

Die Transformation vom Kamerakoordinatensystem auf das Objektkoordinatensystem ist wie folgt:

$$x_B = v_x \cdot t - x_C \, , \qquad y_B = y_C \, , \qquad z_B = h - z_C \, ,$$

wobei $v_x$ die Geschwindigkeit des Förderbandes 4 bzw. des Objektes 3 relativ zur Kamera 2 ist und t die Zeitspanne, seit der die Vorderseite des Objekts 3 sich unter der Kamera 2 durchbewegt hat. Die Geschwindigkeit $v_x$ des Förderbandes 4 beträgt in diesem Beispiel 0,025m/Bild(frame).

Ein Punkt der Laserlinie auf dem Objekt 3 hat die Koordinaten (x,y,z) und wird von der Kamera 2 durch Projektion auf die Bildebene als korrespondierend zu Punkt (X,Y) gesehen. Die Rückrechnung vom Punkt (X,Y), der in der Bildebene liegt, zum "realen" Punkt des Objekts 3 wird unter Verwendung des Kamerakoordnatensystems durchgeführt:

$$x_C = \frac{X \cdot d}{X + d - \Delta x} \, , \qquad y_C = \frac{Y \cdot d}{X + d - \Delta x} \, , \qquad z_C = \frac{h \cdot d}{X + d - \Delta x} \, .$$

Die Größe $\Delta x$ bezeichnet den Abstand von der Referenzlinie des Lasers 1 zur Brennachse der Kamera 2 in der Bildebene, also auf dem Förderband 4. Die Beziehung zwischen den einzelnen Pixelwerten $x_{pixel}$ und $y_{pixel}$ der Kamera 2 und den (X,Y) Koordinaten ist in Fig. 2 dargestellt und kann ausgedrückt werden als

$$X = (x_{pixel} + xoff) \cdot xmul \, , \qquad Y = (y_{pixel} + yoff) \cdot ymul \, ,$$

wobei *xmul* und *ymul* das Verhältnis der Abmessung des Objekts 3 am Förderband 4 in Metern zu der Anzahl von Pixeln in der *x*- bzw. *y*-Richtung angeben und *xoff* und *yoff* die Offsets der Pixel in *x*- und *y*-Richtung angeben.

Wenn von der Kamera 2 ein Bild aufgenommen worden ist, dann wird als erster Schritt das Bild gefiltert, um das Laserlicht besser herauszuarbeiten. Die Filterung erfolgt mittels Software, es wird durch das "Filter" nur jenes Licht durchgelassen, das im Wesentlichen der Wellenlänge des Laserlichts entspricht. Entsprechende Filterprogramme sind dem Fachmann bekannt und werden hier nicht näher erläutert.

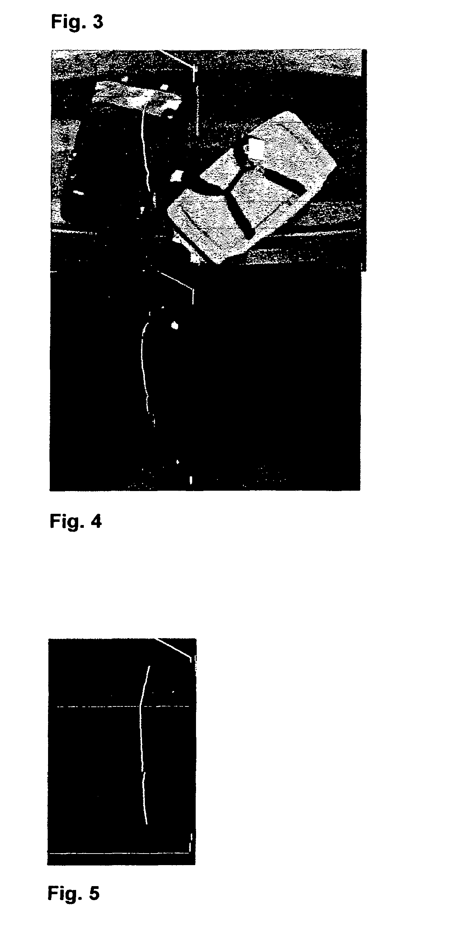

In Fig. 3 ist eine Originalaufnahme von zwei mit grünem Laserlicht bestrahlten Objekten zu sehen. Links im Bild ein Trolley, rechts eine Reisetasche. Die Objekte berühren einander und weisen für die Gepäcksortierung einen zu geringen Abstand voneinander auf.

In Fig. 4 ist das gefilterte Bild von Fig. 3 zu sehen, in dem nur mehr die Laserlinien sowie Reflexionen des Laserlichts an einigen Bereichen des linken Objekts zu erkennen sind.

Als nächster Schritt müssen im gefilterten Bild die Liniensegmente der Laserlinie bestimmt werden. Im Wesentlichen geht es darum, pro Pixelreihe das Pixel zu identifizieren, das aufgrund seiner Helligkeit und aufgrund seiner Nachbarschaft zum hellsten Pixel in der oben und unten benachbarten Pixelzeile zum gesuchten Liniensegment gehört. Auch müssen in diesem Zusammenhang sogenannte "Ausreißer" in den Daten eliminiert werden, also z.B. "Löcher" in einem Liniensegment. Entsprechende Softwareprogramme hierzu sind dem Fachmann bekannt, und werden hier nicht näher erläutert. So kann etwa zur Eliminierung von "Löchern" der einschlägig bekannte RANSAC-Algorithmus verwendet werden. RANSAC (Random Sample Consensus, deutsch etwa Korrespondenzen von Zufallspunkten) ist ein mathematischer Algorithmus zur Detektion von Ausreißern beziehungsweise groben Fehlern innerhalb einer Menge von Datenpunkten.

Bei diesem Schritt können zum Beispiel ungewollte Reflexionen des Laserlichts eliminiert werden. Siehe hierzu Fig. 5, wo für das gefilterte Bild aus Fig. 4 die Liniensegmente bestimmt wurden. Dabei wurde zum Beispiel der helle Fleck in der Mitte des oberen Bildbereichs in Fig. 4 eliminiert.

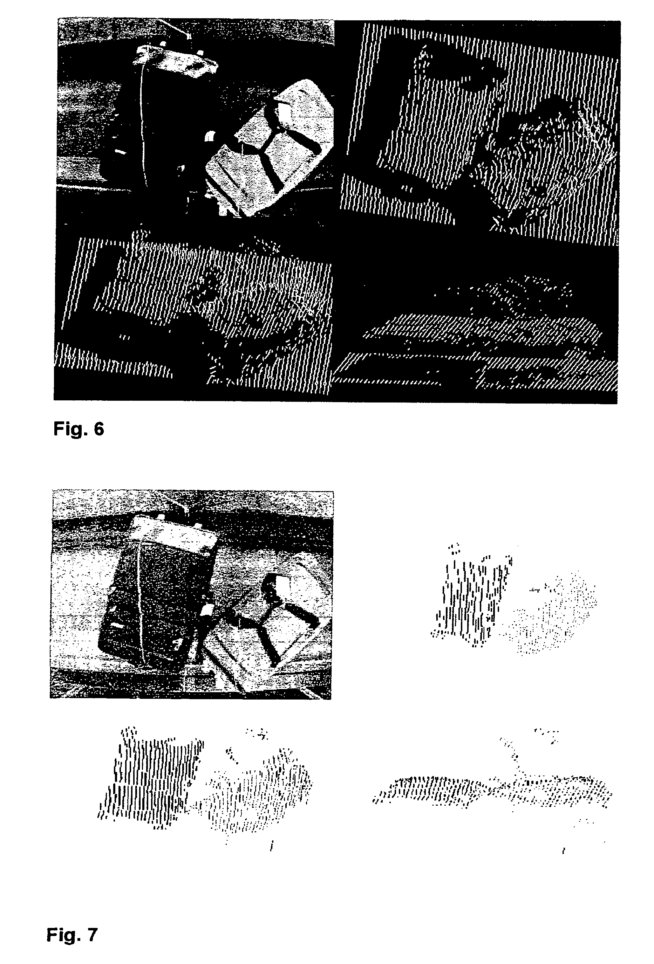

In Fig. 6 sind viele Liniensegmente von aufeinanderfolgenden Bildern überlagert und bereits anhand der oben angeführten Formeln zur Transformation auf eine dreidimensionale Darstellung umgerechnet worden. Die Abbildung links oben zeigt das Originalbild der Kamera (entsprechend Fig. 3), die übrigen drei Abbildungen dreidimensionale Abbildungen der Objekte aus verschiedenen Perspektiven.

Für das menschliche Auge sind darauf bereits zwei verschiedene Objekte zu erkennen, für die Bildverarbeitung muss hier nun das erfindungsgemäße Verfahren eingesetzt werden: es muss bestimmt werden, welche Liniensegmente ein Objekt bilden.

Zu diesem Zweck wird, wie weiter oben bereits erläutert, der räumliche Abstand benachbarter Liniensegmente bestimmt, und der kleinste räumliche Abstand zweier Punkte, die jeweils auf benachbarten Liniensegmenten liegen, bestimmt. Liegt dieser Abstand unter einem vorab bestimmten Grenzwert, so gehören beide Liniensegmente zum selben Objekt.

In Fig. 7 sind aufgrund dieser Berechnungen die Liniensegmente aus Fig. 6 zwei verschiedenen Objekten zugeordnet und entsprechend verschieden eingefärbt worden.

Sind nun diese Objekte einmal identifiziert worden, kann deren Abstand zueinander bestimmt werden. Wenn dieser einen definierten Minimalabstand unterschreitet, dann können je nach Steuerung der Förderanlage verschiedene Maßnahmen gesetzt werden, um diesen Fehler zu beheben: entweder gibt es in der Förderanlage mechanische Einrichtungen, die den Abstand der beiden Objekte voneinander vergrößern können, oder es wird manuell eingegriffen.

Bezugszeichen:

1 Laser
2 Kamera
3 Objekt
4 Förderband

**Patentansprüche**

1. Verfahren zur Bilderkennung von einzelnen bewegten Objekten (3), wie etwa in Förderanlagen, insbesondere auf Förderbändern (4), bei welchem mittels einer zweidimensionalen Quelle von Licht, insbesondere einem Laser (1), eine Linie auf den Hintergrund der Objekte, z.B. auf das Förderband (4), projiziert wird und von einer optoelektronischen Einrichtung (2) laufend Bilder von sich vor diesem Hintergrund befindenden Objekten (3) und der Lichtlinie aufgenommen werden, und die Bilder mittels Bildverarbeitung zu einer dreidimensionalen Darstellung aus Liniensegmenten zusammengesetzt werden,
**dadurch gekennzeichnet, dass** ein Liniensegment einem ersten Objekt zugeordnet wird, wenn der räumliche Abstand dieses Liniensegments zu einem benachbarten Liniensegment, das diesem ersten Objekt bereits zugeordnet wurde, einen bestimmten Grenzwert unterschreitet, und andernfalls das Liniensegment einem zweiten Objekt zugeordnet wird.

2. Verfahren nach Anspruch 1, **dadurch gekennzeichnet, dass** der räumliche Abstand zweier benachbarter Liniensegmente als der kleinste räumliche Abstand zwischen einem Punkt auf dem ersten und einem Punkt auf dem zweiten Liniensegment definiert ist.

3. Verfahren nach Anspruch 1 oder 2, **dadurch gekennzeichnet, dass** bei der Bestimmung der Liniensegmente und/ oder bei der Zuordnung von Liniensegmenten zu einem Objekt der RANSAC-Algorithmus eingesetzt wird.

4. Verfahren nach einem der Ansprüche 1 bis 3, **dadurch gekennzeichnet, dass** in Abhängigkeit von der Anzahl und/ oder der Lage der einzelnen Objekte in die Steuerung der Förderanlage bzw. der Objekte eingegriffen wird.

**5.** Vorrichtung zur Durchführung des Verfahrens nach einem der Ansprüche 1 bis 4, umfassend zumindest eine zweidimensionale Quelle von Licht, insbesondere einen Laser (1), mit der eine Linie auf den Hintergrund der Objekte, z.B. auf ein Förderband (4), projiziert werden kann, eine optoelektronische Einrichtung (2), die laufend Bilder von sich vor diesem Hintergrund (4) befindenden Objekten (3) und der Lichtlinie aufnehmen kann, und eine Einrichtung zur Bildverarbeitung, wo die Bilder zu einer dreidimensionalen Darstellung aus Liniensegmenten zusammengesetzt werden können,
**dadurch gekennzeichnet, dass** die Einrichtung zur Bildverarbeitung ein Computerprogramm enthält, mit welchem ein Liniensegment einem ersten Objekt zugeordnet wird, wenn der räumliche Abstand dieses Liniensegments zu einem benachbarten Liniensegment, das diesem ersten Objekt bereits zugeordnet wurde, einen bestimmten Grenzwert unterschreitet, und andernfalls das Liniensegment einem zweiten Objekt zugeordnet wird.

**6.** Vorrichtung nach Anspruch 5, **dadurch gekennzeichnet, dass** der räumliche Abstand zweier benachbarter Liniensegmente als der kleinste räumliche Abstand zwischen einem Punkt auf dem ersten und einem Punkt auf dem zweiten Liniensegment definiert ist.

**7.** Vorrichtung nach Anspruch 5 oder 6, **dadurch gekennzeichnet, dass** bei der Bestimmung der Liniensegmente und/oder bei der Zuordnung von Liniensegmenten zu einem Objekt der RANSAC-Algorithmus eingesetzt wird.

**Claims**

**1.** A method for image recognition of individual moved objects (3), for example in conveyor systems, in particular on conveyor belts (4), in which a line is projected onto the background of the objects, e. g. onto the conveyor belt (4), by means of a two-dimensional source of light, in particular by means of a laser (1), and in which images of objects being in front of said background and of the light line are permanently taken by an optoelectronic device (2) and the images are put together into a three-dimensional depiction of line segments by means of image processing,
**characterized in that**
a line segment is assigned to a first object if the spatial distance of said line segment to an adjacent line segment which has already been assigned to said first object falls below a certain limit value, and that otherwise the line segment is assigned to a second object.

**2.** The method according to claim 1, **characterized in that** the spatial distance of two adjacent line segments is defined as the smallest spatial distance between a point on the first and a point on the second line segment.

**3.** The method according to claim 1 or 2, **characterized in that** the RANSAC algorithm is applied for defining the line segments and/or for assigning line segments to an object.

**4.** The method according to any one of claims 1 to 3, **characterized in that** depending on the number and/or position of the individual objects it is interfered with the controlling of the conveyor system or, respectively, the objects.

**5.** A device for carrying out the method according to any one of claims 1 to 4, comprising at least one two-dimensional source of light, in particular a laser (1), by means of which a line may be projected onto the background of the objects, e. g. onto a conveyor belt (4), an optoelectronic device (2) which may permanently take images of objects (3) being in front of said background (4) and of the light line, and a device for image processing in which the images may be put together to a three-dimensional depiction of line segments,
**characterized in that**
the device for image processing comprises a computer program by means of which a line segment is assigned to a first object if the spatial distance of said line segment to an adjacent line segment which has already been assigned to said first object falls below a certain limit value, and that otherwise the line segment is assigned to a second object.

**6.** The device according to claim 5, **characterized in that** the spatial distance of two adjacent line segments is defined as the smallest spatial distance between a point on the first and a point on the second line segment.

**7.** The device according to claim 5 or 6, **characterized in that** the RANSAC algorithm is applied for defining the line segments and/or for assigning line segments to an object.

**Revendications**

1. Procédé de reconnaissance d'images d'objets mobiles individuels (3), comme par exemple dans des installations de transport, notamment sur des bandes transporteuses (4), dans lequel on projette une ligne sur l'arrière-plan des objets par exemple sur la bande transporteuse (4) au moyen d'une source lumineuse bidirectionnelle, notamment d'un laser (1), et on enregistre en permanence à l'aide d'un équipement optoélectronique (2), les images d'objets (3) se trouvant devant cet arrière-plan et de la ligne lumineuse, et les images sont assemblées au moyen de traitement d'image en une représentation tridimensionnelle de segments de lignes,
**caractérisé en ce qu'**un segment de ligne est attribué à un premier objet lorsque la distance spatiale entre ce segment de ligne et un segment de ligne voisin déjà attribué à ce premier objet est inférieure à une valeur limite définie, sinon le segment de ligne est attribué à un deuxième objet.

2. Procédé selon la revendication 1, **caractérisé en ce que** la distance spatiale de deux segments de lignes voisins est définie comme la plus petite distance spatiale entre un point sur le premier segment de ligne et un point sur le deuxième.

3. Procédé selon la revendication 1 ou 2, **caractérisé en ce qu'**on met en oeuvre l'algorithme RANSAC lors de la détermination des segments de lignes et/ou lors de l'attribution de segments de lignes à un objet.

4. Procédé selon une des revendications 1 à 3, **caractérisé en ce qu'**on intervient dans la commande de l'installation de transport respectivement des objets en fonction du nombre et/ou de la position des objets individuels.

5. Dispositif pour l'exécution du procédé selon une des revendications 1 à 4, comprenant au moins une source lumineuse bidirectionnelle, notamment un laser (1), permettant de projeter une ligne sur l'arrière-plan des objets par exemple sur une bande transporteuse (4), un équipement optoélectronique (2) permettant d'enregistrer en permanence les images d'objets (3) se trouvant devant cet arrière-plan (4) et de la ligne lumineuse, et un équipement de traitement d'image permettant d'assembler les images en une représentation tridimensionnelle de segments de lignes,
**caractérisé en ce que** l'équipement de traitement d'image contient un programme informatique attribuant un segment de ligne à un premier objet lorsque la distance spatiale entre ce segment de ligne et un segment de ligne voisin déjà attribué à ce premier objet est inférieure à une valeur limite définie, sinon le segment de ligne est attribué à un deuxième objet

6. Dispositif selon la revendication 5, **caractérisé en ce que** la distance spatiale de deux segments de lignes voisins est définie comme la plus petite distance spatiale entre un point sur le premier segment de ligne et un point sur le deuxième.

7. Dispositif selon la revendication 5 ou 6, **caractérisé en ce qu'**on met en oeuvre l'algorithme RANSAC lors de la détermination des segments de lignes et/ou lors de l'attribution de segments de lignes à un objet.

**Fig. 1**

**Fig. 2**

**Fig. 3**

**Fig. 4**

**Fig. 5**

**Fig. 6**

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **AUTOREN RAFFAELLA MATTONE ; GIUSEPPINA CAMPAGIORNI ; ANDREAS WOLF.** Fuzzy-based processing of 3D information for item localization in the automated sorting of recyclable packaging. *IEEE International Conference on Fuzzy Systems,* 1998, 1613-1618

- **R. MATTONE ; G. CAMPAGIORNI ; F. GALATI.** Sorting of items on a moving conveyor belt. Part 1: a technique for detecting and classifying objects. *Robotics and Computer Integrated Manufacturing,* 01. April 2000, vol. 16 (2-3), 73-80